# EUROPÄISCHE PATENTSCHRIFT

(11) **EP 2 191 157 B1**
(45) Veröffentlichungstag und Bekanntmachung des Hinweises auf die Patenterteilung: **20.06.2012**
(21) Anmeldenummer: 08786923.6
(22) Anmeldetag: 06.08.2008
(51) Int. Cl.: F16D 13/64

(54) **SCHALTRAD FÜR EINE SYNCHRONISIERVORRICHTUNG EINES ZAHNRÄDERWECHSELGETRIEBES**
CONTROL GEAR FOR A SYNCHRONIZING DEVICE OF A CHANGE-SPEED GEARBOX
PIGNON DE COMMANDE POUR UN SYNCHRONISEUR D'UNE BOÎTE DE VITESSES À ENGRENAGES

(30) Priorität: 07.09.2007 DE 102007042798
(43) Veröffentlichungstag der Anmeldung: 02.06.2010
(73) Patentinhaber: Schaeffler Technologies AG & Co. KG, 91074 Herzogenaurach (DE)
(72) Erfinder: FOLK, Rudolf, 96152 Burghaslach (DE)
(86) Internationale Anmeldenummer: PCT/EP2008/060316
(87) Internationale Veröffentlichungsnummer: WO 2009/033895

(56) Entgegenhaltungen:
- WO-A-2004/062844
- DE-U1- 20 215 431
- JP-A- 60 263 728
- US-A- 4 445 602

## Beschreibung

Die Erfindung betrifft ein Schaltrad für eine Synchronisiervorrichtung eines Zahnräderwechselgetriebes.

Eine Synchronisiereinrichtung dient zum Schalten von Gangrädern in einem Getriebe. Sie findet Anwendung in Zahnräderwechselgetrieben, die den Gangwechsel vereinfachen. Beispiele für eine derartige Synchronisiereinrichtung sind in der EP 0 897 068 B1 und in der EP 0 907 838 B1 beschrieben.

In derartigen Synchronisiereinrichtungen kommen Schalträder der eingangs genannten Art zum Einsatz. Gemäß einer verbreiteten Ausgestaltung kommen als Schalträder Zahnräder zum Einsatz, an denen ein Kupplungskörper mit einer Verzahnung angeordnet ist, die zum Herstellen einer formschlüssigen Verbindung im gekoppelten Zustand dient. Der Kupplungskörper ist dabei vorzugsweise am Schaltrad angeschweißt. Eine derartige Lösung ist aus der DE 198 11 096 A1 bekannt. Eine ähnliche Ausgestaltung zeigt die DE 199 33 468 A1**.**

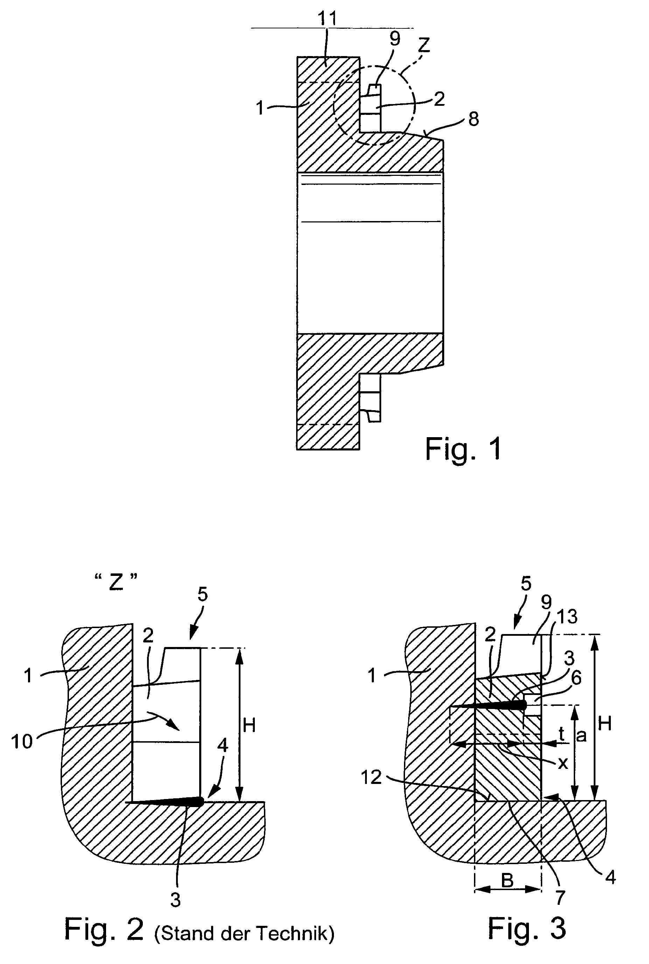

Bekannt ist es dabei namentlich, eine Ausgestaltung vorzusehen, wie sie aus Fig. 2 hervorgeht. Dort ist die Einzelheit "Z" gemäß Fig. 1 dargestellt. In Fig. 1 ist ein Schaltrad 1 mit einem Kupplungskörper 2 im Radialschnitt zu sehen. Der Kupplungskörper 2 hat die bereits erwähnte Verzahnung 9, die im geschalteten Zustand des Schaltrades 1 einen formschlüssigen Verbund mit einem Gegenzahnrad herstellt. Ferner ist ein Reibring 8 mit konischer Außenfläche am Schaltrad 1 angeordnet, mit dem der Drehzahlangleich bewerkstelligt wird. Zu diesbezüglichen Details wird ausdrücklich auf die DE 198 11 096 A1 der Anmelderin verwiesen, wo in Fig. 3 des Dokuments die komplette Einbausituation der maßgeblichen Teile der Synchronisiereinrichtung dargestellt sind und im zugehörigen Beschreibungstext die Wirkungsweise erläutert ist.

Wie aus Fig. 2 gesehen werden kann, ist bei der vorbekannten gattungsgemäßen Lösung der Kupplungskörper 2 auf einen zylindrischen Sitz des Schaltrades 1 aufgesetzt und dann im radial innenliegenden Endbereich 4 des Kupplungskörpers 2 eine Schweißung 3 angebracht, die den Kupplungskörper 2 am Schaltrad 1 festlegt. Der Kupplungskörper 2 wird nämentlich mit seinem Innendurchmesser auf einen Absatz am Schaltrad 1 aufgepresst und dann an der Trennfuge durch Elektronenstrahlschweißen verschweißt. Danach wird das Schaltrad 1 mit dem aufgeschweißten Kupplungskörper 2 gemeinsam gehärtet.

Es hat sich dabei als nachteilig herausgestellt, dass sich beim Schweißen und Härten der Kupplungskörper 2 so verzieht, dass über dem Umfang eine wellenförmige Tellerung auftritt. An gewissen Umfangsstellen des Kupplungskörpers 2 verbiegt sich der Kupplungskörper 2 in Richtung des Pfeils 10 (s. Fig. 2), d. h. es erfolgt eine Kippbewegung, die zu einem unrunden Lauf des Kupplungskörpers 2 führt. Dies hat durch eine ungleichmäßige Verteilung der Zähne der Verzahnung 9 über den Umfang eine ungleichmäßige Momentenübertragung zur Folge, was wiederum zu überhöhten Spannungen an einzelnen Zähnen der Verzahnung 9 führt. Die Folge ist ein frühzeitiger Ausfall des Bauteils im Betrieb.

WO 2004/062844 A1 vermeidet eine Tellerung durch die doppelte Anzahl der Schweißnähte. Die Herstellung der Baueinheit ist damit verhältnismäßig aufwändig.

### Aufgabe der Erfindung

Der vorliegenden Erfindung liegt die Aufgabe zugrunde, ein Schaltrad der eingangs genannten Art so weiterzubilden, dass die genannten Nachteile vermieden oder zumindest wesentlich reduziert werden. Es sollen also die Funktion und die Zuverlässigkeit des Schaltrades während des Synchronisiervorgangs durch eine verbesserte Qualität der Verzahnung nach dem Schweißen und Härten verbessert bzw. gewährleistet werden. Ferner sollen durch eine gleichmäßigere Zahnverteilung, insbesondere hinsichtlich der Einzelteilung, der Summenteilung und der Rundheit der Verzahnung, und das Verhindern der wellenförmigen Tellerung die Spannungen im Bauteil während der Momentenübertragung reduziert werden. Damit soll erreicht werden, dass bei gleicher Konstruktion höhere Momente übertragen werden können, was die Lebensdauer des Bauteils erhöht.

### Zusammenfassung der Erfindung

Die Lösung dieser Aufgabe durch die Erfindung ist dadurch gekennzeichnet, dass in dem Kupplungskörper in Höhe der Schweißung, stirnseitig eine Ringnut angeordnet ist.

Bevorzugt ist dabei vorgesehen, dass die Schweißung in einem Abstand zwischen 33 % und 66 % der Höhe des Kupplungskörpers vom radial innenliegenden Endbereich angeordnet ist. Besonders bevorzugt beträgt der Abstand 50 % der Höhe des Kupplungskörpers vom radial innenliegenden Endbereich.

Die Schweißung ist bevorzugt eine Elektronenstrahlschweißung.

In den Kupplungskörper kann in Höhe der Schweißung stirnseitig eine Ringnut eingearbeitet sein. Dies ermöglicht bei breiten Kupplungskörpern eine Überbrückung, um die verfügbare Schweißnahttiefe optimal nutzen zu können. Die Tiefe der Ringnut beträgt dabei vorzugsweise 10 % bis 25 % der Breite des Kupplungskörpers. Die Ringnut hat dabei vorzugsweise im Radialschnitt eine rechteckige Form. Alternativ kann auch vorgesehen werden, dass die Ringnut im Radialschnitt eine konkave Form aufweist. Dies kann beispielsweise dann vorgesehen werden, wenn die Ringnut durch einen spanlosen Vorgang eingebracht wird, z. B. durch einen Einrollvorgang.

Im radial innenliegenden Endbereich des Kupplungskörpers ist vorzugsweise eine zylindrische Passfläche zwischen dem Kupplungskörper und dem Schaltrad vorhanden. Dies erlaubt die genaue Zentrierung des Kupplungskörpers am Schaltrad.

Das Schaltrad hat bevorzugt weiterhin einen Reibring mit konischer Außenfläche. Der Reibring kann dabei als separates Bauteil gefertigt und mit dem Schaltrad verbunden sein.

Man kann also sagen, dass die Erfindung in vorteilhafter Weise vorsieht, dass die Verschweißung vom Innendurchmesser, also von der Trennfuge, verschoben und weiter nach außen verlagert wird. Dies erfolgt bevorzugt etwa in die radiale Mitte des Kupplungskörpers.

Durch diese Maßnahme wird ein wellenförmiges Tellern des Bauteils zuverlässig verhindert.

### Kurze Beschreibung der Figuren

In den Zeichnungen ist ein Ausführungsbeispiel der Erfindung dargestellt. Es zeigen:
- Fig. 1: schematisch den Radialschnitt durch ein Schaltrad einer Synchronisiervorrichtung eines Zahnräderwechselgetriebes,
- Fig. 2: die Einzelheit "Z" gemäß Fig. 1 bei einer Lösung gemäß dem Stand der Technik und
- Fig. 3: die Einzelheit "Z" gemäß Fig. 1 bei einer erfindungsgemäßen Ausgestaltung.

### Ausführliche Beschreibung der Figuren

In Fig. 1 ist - wie schon oben erläutert - ein Schaltrad 1 zu sehen, das eine Außenverzahnung 11 aufweist, die zum Kämmen mit einem nicht dargestellten weiteren Zahnrad dient. Zum Herstellen einer formschlüssigen Verbindung im gekoppelten Zustand weist das Schaltrad 1 einen Kupplungskörper 2 auf, der seinerseits eine Verzahnung 9 hat, die zum Eingriff in eine entsprechende Gegenverzahnung eines weiteren Bauteils der Synchronisiervorrichtung ausgebildet und vorgesehen ist.

Zur an sich hinlänglich bekannten Funktionsweise einer Synchronisiereinrichtung mit dem gegenständlichen Schaltrad wird ausdrücklich auf die DE 198 11 096 A1 der Anmelderin Bezug genommen, wo das Schaltrad und sein Einbau in einer Synchronisiereinrichtung eingehend erläutert ist.

In Fig. 3 sind Details der Ausgestaltung gemäß der Erfindung zu erkennen.

Der Kupplungskörper 2 ist mittels einer Schweißung 3 am Schaltrad 1 festgelegt. Die Schweißung 3 ist im Ausführungsbeispiel mittels Elektronenstrahlschweißen hergestellt. Es können jedoch auch andere Schweißverfahren eingesetzt werden.

Der Kupplungskörper 2 sitzt mit einem radial innenliegenden Endbereich 4 auf einer zylindrischen Sitzfläche 12 des Schaltrades 1, so dass sich zwischen Schaltrad 1 und Kupplungskörper 2 eine zylindrische Passfläche 7 ergibt.

Der ringförmige Kupplungskörper 2 erstreckt sich dabei radial von dem innenliegenden Endbereich 4 bis zu einem außenliegenden Endbereich 5 über eine Höhe H, gemessen in radiale Richtung. Die Breite des Kupplungskörpers 2 ist mit B angegeben.

Wesentlich ist, dass die Schweißung 3 vom radial innenliegenden Endbereich 4 des Kupplungskörpers 2 beabstandet angeordnet ist. Der Abstand ist in Fig. 3 mit a angegeben. Bei dem Abstand handelt es sich bevorzugt etwa um die Hälfte der Höhe H, d. h. die Schweißung 3 liegt in diesem Fall etwa mittig im Kupplungskörper 2.

Bei einer größeren Breite B des Kupplungskörpers 2 kann eine Ausgestaltung vorgesehen werden, wie sie Fig. 3 zeigt: Hier ist in die eine Stirnseite 13 des Kupplungskörpers 2 eine Ringnut 6 mit im Radialschnitt rechteckiger Form eingearbeitet, die sich über eine gewisse Tiefe t erstreckt. Die Ringnut 6 überbrückt als Aussparung einen Teil des Kupplungskörpers 2, um mit der zur Verfügung stehenden Schweißnahttiefe x, s. Fig. 3, eine feste Verbindung zwischen Kupplungsköper 2 und Schaltrad 1 sicherzustellen.

Eine alternative Ausgestaltung (nicht dargestellt) sieht vor, die Ringnut im Radialschnitt konkav auszubilden. Darüber hinaus sind auch weitere Formgebungen möglich.

Das Elektronenstrahlschweißen zum Herstellen der Schweißung ist - wie bereits erwähnt - bevorzugt, jedoch können auch andere Schweißverfahren eingesetzt werden.

Die Anordnung des Kupplungskörpers 2 am Schaltrad 1 erfolgt gemäß der vorgeschlagenen Ausgestaltung in einer solchen Weise, dass eine wellenförmige Tellerung (Bewegung des Kupplungskörpers 2 in Richtung des Pfeils 10 in Fig. 2) nicht auftreten bzw. zumindest weitgehend vermieden werden kann.

Am Schaltrad 1 ist noch - wie aus Fig. 1 hervorgeht - ein Reibring 3 angeordnet, der im Schaltrad 1 selber angeformt oder der als separates Bauteil gefertigt und dann am Schaltrad angebracht werden kann.

### Bezugszeichenliste

- 1: Schaltrad
- 2: Kupplungskörper
- 3: Schweißung
- 4: radial innenliegender Endbereich
- 5: radial außenliegender Endbereich
- 6: Ringnut
- 7: zylindrische Passfläche
- 8: Reibring
- 9: Verzahnung
- 10: Kippbewegung
- 11: Außenverzahnung
- 12: zylindrische Sitzfläche
- 13: Stirnseite

- H: Höhe
- a: radialer Abstand
- t: Tiefe
- B: Breite
- x: Schweißnahttiefe

## Patentansprüche

1. Schaltrad (1) für eine Synchronisiervorrichtung eines Zahnräderwechselgetriebes, insbesondere eines Kraftfahrzeugs, wobei ein Kupplungskörper (2) mittels einer das Schaltrad (1) und den Kupplungskörper (2) verbindenden Schweißung (3) am Schaltrad (1) festgelegt ist und wobei sich der Kupplungskörper (2) über eine radiale Höhe (H) von einem radial innenliegenden Endbereich (4) bis zu einem radial außenliegenden Endbereich (5) erstreckt, wobei die Schweißung (3) vom radial innenliegenden Endbereich (4) beabstandet (a) angeordnet ist, **dadurch gekennzeichnet, dass** in den Kupplungskörper (2) in Höhe der Schweißung (3) stirnseitig eine Ringnut (6) eingearbeitet ist.

2. Schaltrad nach Anspruch 1, **dadurch gekennzeichnet, dass** die Schweißung (3) in einem Abstand (a) zwischen 33 % und 66 % der Höhe (H) des Kupplungskörpers (2) vom radial innenliegenden Endbereich (4) angeordnet ist.

3. Schaltrad nach Anspruch 1, **dadurch gekennzeichnet, dass** die Schweißung (3) in einem Abstand (a) von 50 % der Höhe (H) des Kupplungskörpers (2) vom radial innenliegenden Endbereich (4) angeordnet ist.

4. Schaltrad nach Anspruch 1, **dadurch gekennzeichnet, dass** die Schweißung (3) eine Elektronenstrahlschweißung ist.

5. Schaltrad nach Anspruch 1, **dadurch gekennzeichnet, dass** die maximale Tiefe (t) der Ringnut (6) 10 % bis 25 % der Breite (B) des Kupplungskörpers (2) beträgt.

6. Schaltrad nach Anspruch 1, **dadurch gekennzeichnet, dass** die Ringnut (6) im Radialschnitt eine rechteckige Form aufweist.

7. Schaltrad nach Anspruch 1, **dadurch gekennzeichnet, dass** die Ringnut (6) im Radialschnitt eine konkave Form aufweist.

8. Schaltrad nach Anspruch 1, **dadurch gekennzeichnet, dass** im radial innenliegenden Endbereich (4) des Kupplungskörpers (2) eine zylindrische Passfläche (7) zwischen dem Kupplungskörper (2) und dem Schaltrad (1) vorhanden ist.

9. Schaltrad nach Anspruch 1, **dadurch gekennzeichnet, dass** das Schaltrad (1) weiterhin einen Reibring (8) mit konischer Außenfläche aufweist.

10. Schaltrad nach Anspruch 9, **dadurch gekennzeichnet, dass** der Reibring (8) als separates Bauteil gefertigt und mit dem Schaltrad (1) verbunden ist.

## Claims

1. Shift wheel (1) for a synchronizing device of a change-speed gearbox, in particular of a motor vehicle, wherein a clutch body (2) is fixed to the shift wheel (1) by means of a weld (3) which connects the shift wheel (1) and the clutch body (2), and wherein the clutch body (2) extends over a radial height (H) from a radially inner end region (4) to a radially outer end region (5), wherein the weld (3) is arranged at a distance (a) from the radially inner end region (4), **characterized in that** an annular groove (6) is formed into the clutch body (2) on the face side at the level of the weld (3).

2. Shift wheel according to Claim 1, **characterized in that** the weld (3) is arranged at a distance (a) of between 33% and 66% of the height (H) of the clutch body (2) from the radially inner end region (4).

3. Shift wheel according to Claim 1, **characterized in that** the weld (3) is arranged at a distance (a) of 50% of the height (H) of the clutch body (2) from the radially inner end region (4).

4. Shift wheel according to Claim 1, **characterized in that** the weld (3) is an electron beam weld.

5. Shift wheel according to Claim 1, **characterized in that** the maximum depth (t) of the annular groove (6) amounts to 10% to 25% of the width (B) of the clutch body (2).

6. Shift wheel according to Claim 1, **characterized in that** the annular groove (6) has a rectangular shape in radial section.

7. Shift wheel according to Claim 1, **characterized in that** the annular groove (6) has a concave shape in radial section.

8. Shift wheel according to Claim 1, **characterized in that**, in the radially inner end region (4) of the clutch body (2), a cylindrical fitting surface (7) is provided between the clutch body (2) and the shift wheel (1).

9. Shift wheel according to Claim 1, **characterized in that** the shift wheel (1) furthermore has a friction ring (8) with a conical outer surface.

10. Shift wheel according to Claim 9, **characterized in that** the friction ring (8) is produced as a separate component and is connected to the shift wheel (1).

## Revendications

1. Pignon de commande (1) pour un synchroniseur d'une boîte de vitesse à engrenages, notamment d'un véhicule automobile, dans lequel un corps d'accouplement (2) est fixé au pignon de commande (1) au moyen d'un soudage (3) reliant le pignon de commande (1) et le corps d'accouplement (2), et dans lequel le corps d'accouplement (2) s'étend sur une hauteur radiale (H) depuis une région d'extrémité (4) située radialement à l'intérieur jusqu'à une région d'extrémité (5) située radialement à l'extérieur, le soudage (3) étant disposé à une distance (a) de la région d'extrémité (4) située radialement à l'intérieur, **caractérisé en ce que** dans le corps d'accouplement (2), à la hauteur du soudage (3), est pratiquée une rainure annulaire (6) du côté frontal.

2. Pignon de commande selon la revendication 1, **caractérisé en ce que** le soudage (3) est disposé à une distance (a) comprise entre 33 % et 66 % de la hauteur (H) du corps d'accouplement (2) de la région d'extrémité (4) située radialement à l'intérieur.

3. Pignon de commande selon la revendication 1, **caractérisé en ce que** le soudage (3) est disposé à une distance (a) de 50 % de la hauteur (H) du corps d'accouplement (2) de la région d'extrémité (4) située radialement à l'intérieur.

4. Pignon de commande selon la revendication 1, **caractérisé en ce que** le soudage (3) est un soudage par faisceau d'électrons.

5. Pignon de commande selon la revendication 1, **caractérisé en ce que** la profondeur maximale (t) de la rainure annulaire (6) vaut 10 % à 25 % de la largeur (B) du corps d'accouplement (2).

6. Pignon de commande selon la revendication 1, **caractérisé en ce que** la rainure annulaire (6) présente une forme rectangulaire en coupe radiale.

7. Pignon de commande selon la revendication 1, **caractérisé en ce que** la rainure annulaire (6) présente une forme concave en coupe radiale.

8. Pignon de commande selon la revendication 1, **caractérisé en ce qu'**une surface d'adaptation (7) cylindrique est prévue dans la région d'extrémité (4) du corps d'accouplement (2) située radialement à l'intérieur entre le corps d'accouplement (2) et le pignon de commande (1).

9. Pignon de commande selon la revendication 1, **caractérisé en ce que** le pignon de commande (1) présente en outre une bague de friction (8) de surface extérieure conique.

10. Pignon de commande selon la revendication 9, **caractérisé en ce que** la bague de friction (8) est fabriquée sous forme de composant séparé et est connectée au pignon de commande (1).
